# EUROPÄISCHE PATENTSCHRIFT

(11) **EP 0 913 082 B1**
(45) Veröffentlichungstag und Bekanntmachung des Hinweises auf die Patenterteilung: **21.02.2001**
(21) Anmeldenummer: 98120084.3
(22) Anmeldetag: 23.10.1998
(51) Int. Cl.: A01K 11/00

(54) **Vorrichtung zum Kennzeichnen von Tieren**
Device for marking animals
Dispositif de marquage des animaux

(30) Priorität: 31.10.1997 DE 29719373 U; 28.11.1997 DE 29721045 U
(43) Veröffentlichungstag der Anmeldung: 06.05.1999
(73) Patentinhaber: Förster, Thomas, 78234 Engen (DE)
(72) Erfinder: Förster, Thomas, 78234 Engen (DE)
(74) Vertreter: Weiss, Peter, Dr. rer. nat.

(56) Entgegenhaltungen:
- EP-A- 0 754 406
- EP-B- 0 584 105
- WO-A-97/16963
- GB-A- 2 002 696

## Beschreibung

Die Erfindung betrifft eine Vorrichtung zum Kennzeichnen von Tieren, insbesondere von Kälber bei der Kälbermast oder Aufzucht, mit einer Marke, wobei sich ein Träger an einer offiziellen, privaten und/oder ggf. staatlichen Marke befindet.

Ohrenmarken sind bei Tieren, die einer späteren Verwertung als Lebensmittel dienen sollen, von Staats wegen vorgeschrieben. Diese staatlichen Marken (in Deutschland LKV- bzw. Landeskontrollverband-Marke genannt) dienen einer bleibenden Kennzeichnung des Tieres, wobei sich auf der staatlichen Marke eine Kennzeichnung für die laufende Nummer für das Bundesland befindet. Dies könnten Buchstaben- oder Zahlencodes aber auch Strichcodes, Balkencodes oder andere Kennzeichnungsmittel sein.

Bislang war es notwendig, das Kalb nur an einem Ohr mit einer staatlichen oder ähnlichen Marke wie bspw. des LKV (Landeskontrollverband) in Deutschland zu versehen, so dass das andere Ohr für die Anbringung einer privaten Kennzeichnung bspw. zur Überwachung des Fütterungsverhaltens frei war. Seit neuestem besteht jedoch die offizielle oder staatliche Regelung, dass beide Ohren eines Tieres mit einer staatlichen oder offiziellen Marke versehen werden müssen. Das bedeutet, dass kein Ohr mehr für die private Kennzeichnung frei ist. Die private Kennzeichnung könnte an einem Ohr neben der staatlichen Marke angebracht werden, was jedoch im Hinblick auf die Belastung des Tieres unerwünscht ist. Die private Kennzeichnung besteht zur Verwendung durch elektronische Fütterungs- und Überwachungssysteme, aus einem über Funk lesbaren elektronischen Transponder und einer leicht sichtbaren, der Transpondernummer zugeordneten Management Nummer.

Ferner sollen in manchen Ländern Tierschutzgesetze durchgreifen, welche es dem Landwirt gestatten nur zwei Stiche in die die Ohren von, insbesondere Kälbern zu setzen, um entweder eine genossenschaftliche und die vorgeschriebene staatliche Marke einzusetzen. Nachteilig ist, dass derartige Marken mit Informationen belegt sind, und für individuelle und private Kennzeichnungen, welche bspw. für die Tierhaltung, Aufzucht und Fütterung von Bedeutung sind, nicht genügend Platz vorgesehen ist. Ferner können sich derartige Informationen in Folge von Aufzucht ändern.

Aus der WO 97/16963 ist ein Transpondergehäuse bekannt, welches nur vor dem Anbringen einer staatlichen Marke dort festgelegt werden kann. Dabei ist das Transpondergehäuse mit einer Öffnung versehen, durch welche eine Lasche der staatlichen Marke hindurchgeführt wird. Erst danach kann die staatliche Marke mit dem Tier, insbesondere dessen Ohr verbunden werden.

Nachteilig daran ist, dass ein nachträgliches Anbringen des Transpondergehäuses an die staatliche Marke nicht möglich ist. Der Landwirt kann nicht nachträglich seine mit der staatlichen Marke versehen Tiere kennzeichnen. Er muss dies schon bei der Kennzeichnung der staatlichen Marke tun.

Ferner ist aus der EP 0 584 105 B1 eine Anhängereinheit zum Markieren von Tieren aufgezeigt, wobei auf einen Zapfen, einer am Ohr befestigten staatlichen Marke nachträglich eine Trägermarke aufgesetzt wird. Dabei wird die Trägermarke durch einen Schlitz auf die staatliche Trägermarke aufgeschoben und auf einen Zapfen als Verbindungsstelle zwischen staatlicher Marke und Ohr des Tieres übergestülpt.

Nachteilig daran ist, dass die Trägermarke hinter der staatlichen Marke angeordnet ist und zur Kennzeichnung wesentlich länger ausgebildet sein muss. Daher behindert sie häufiger das Tier. Ferner können nur eine beschränkte Anzahl an Informationen oder Transpondern auf dieser Trägermarke vorgesehen werden. Auch ein Abreissen oder Verlieren ist sehr leicht möglich.

Die GB 2 002 696 A offenbart eine staatliche Marke zum Festlegen an einem Tier, insbesondere an einem Ohr eines Tieres, an welcher an einer Unterkante eine zweite Marke über einen entsprechenden abragenden Zapfen festlegbar ist. Dabei schliesst nach unten hin, hinter der staatlichen Marke eine zweite Marke an. Insgesamt ist die staatliche Marke mit anschliessender zweiten Markierung sehr lange ausgebildet und neigt zum Abreissen.

Der vorliegenden Erfindung liegt die Aufgabe zugrunde, eine bereits vorhandene ggfs. staatliche Marke mit einer privaten Kennzeichnung so zu kombinieren, dass zum einen eine zusätzliche Belastung des Tieres entfällt und zum anderen die private Markierung ggfs. wiederverwendbar ist oder zu Sicherheit vor Fälschungen beiträgt.

Zur Lösung dieser Aufgabe führt, dass der Träger einen Schlitz aufweist und lösbar um einen Hals der staatlichen Marke nachträglich legbar und durch einen Schlitz des Trägers führbar ist, so dass der Träger vor der staatlichen Marke angeordnet ist, wobei der Schlitz schmal ausgebildet ist und nahe und in etwa parallel der oberen Randkante verläuft.

Die Lösbarkeit des Trägers gewährleistet, dass dieser, falls es gewünscht wird, von der staatlichen Marke abgenommen und bei einem anderen Tier wieder verwendet werden kann.

Wesentlich bei der vorliegenden Erfindung ist auch, dass der lösbare Träger beliebig auf eine staatliche oder ggfs. genossenschaftliche Marke nachträglich angebracht werden kann. Dieser dient im wesentlichen zum Speichern von individuellen Informationen bspw. über einen Strichcode, Transponder oder einer Management-Kennzeichnung in Form von bspw. Zahlen od. dgl.. Auf diese Weise können eigene Informationen zusätzlich am Ohr eines Tieres für eigene Zwecke angebracht werden. Die Zuordnung von Managementnummer und Transpondernummer bleibt dabei auch physisch erhalten. Die interne Management-Kennzeichnung hat sich in der Praxis durchgesetzt, da sie im Gegensatz zu den im Transponder vorhandenen vielen Informationen auf die privaten Bedürfnisse zugeschnitten ist und sehr einfach und kurz gehalten werden kann. Bspw. besteht sie lediglich aus drei Zahlen, die das Tier identifizieren.

In einem bevorzugten Ausführungsbeispiel besteht der Träger aus einem flexiblen Kunststoffstreifen, auf dem der Transponder aufgesetzt ist. Ferner ist in diesen Kunststoffstreifen ein Schlitz eingeformt, durch den die staatliche Marke gesteckt werden kann, so dass der Träger an der staatlichen Marke hängt. Normalerweise besitzt die staatliche Marke ein Beschriftungsfeld, an welches ein Hals anschliesst, dem wiederum ein Knopf zum Anbringen der staatlichen Marke am Ohr des Tieres aufgesetzt ist. Der Schlitz in dem Kunststoffstreifen soll nun so ausgestaltet sein, dass er zum einen das Durchschieben des Beschriftungsfeldes zulässt, zum anderen aber an dem Hals der staatlichen Marke so hängt, dass kein Hüpfen des Trägers bei Bewegung des Tierkopfes stattfindet. Zu diesem Zweck ist dem Schlitz noch eine Durchstecköffnung zugeordnet, die ein Durchstecken eines zusammengefalteten Beschriftungsfeldes erlaubt. Im vorliegenden Ausführungsbeispiel können die seitlich von der Durchstecköffnung sich befindenden Flügel flexibel nach aussen aufgebogen werden, so dass das zusammengefaltete Beschriftungsfeld hindurchgesteckt werden kann. Auf dem Trägerfeld besteht für den Anwender genügend Platz, um die gewünschte Managementnummer ggf. auch handschriftlich anzubringen.

Um das Hüpfen des Trägers zu vermeiden, kann der Schlitz eine Länge aufweisen, die einer Breite des Halses der staatlichen Marke in einem Abstand von dem Knopf entspricht, der wiederum einem Abstand des Schlitzes von einer oberen Randkante des Kunststoffstreifens entspricht. Hierdurch wird diese obere Randkante des Kunststoffstreifens an den Knopf gedrückt, so dass sich der Träger nicht entlang dem Hals bewegen kann.

Ein Vorteil der vorliegenden Erfindung liegt darin, dass die private Kennzeichnung falls gewünscht in einer Variante jederzeit von der staatlichen Kennzeichnung abgenommen und einer weiteren oder anderen Verwendung zugeführt werden kann.

Zur weiteren Vereinfachung kann der Träger der privaten Marke in verschiedenen Farben ausgestaltet werden. Damit wird die gezielte Suche nach einzelnen Tieren, auch in einer grösseren Gruppe von Tieren, vereinfacht insbesondere, wenn den verschiedenen Farben bestimmte Zahlenintervalle der Managementnummer, wie z.B. Dekaden zugeordnet sind.

Immer häufiger ist es wichtig den Träger von Informationen, wie Strichcodes, Barcodes, Transpondern oder Management-Kennzeichnungen sicher an der staatlichen Marke anzubringen. Insbesondere soll es auch möglich sein den eigenen Träger oder den Träger des Verbandes fälschungssicher an der staatlichen Marke festzulegen, ohne jedoch die staatliche Marke zu beschädigen. Das Beschädigen der staatlichen Marke wäre eine Urkundenfälschung, die unerlaubt ist. Daher werden immer höhere Anforderungen an Trägermarken gestellt, die Fälschungssicher mit der staatlichen Marke verbunden werden können, ohne diese zu beschädigen. Dabei ist der Träger vor der staatlichen Marke angeordnet und ermöglicht zusätzlich ein nachträgliches Anbringen an der bereits eingezogenen staatlichen Ohrmarke. Hierfür schlägt die Erfindung ein Träger mit einem sehr schmalen Schlitz vor, welcher nahe einer Randkante vorgesehen ist. Bevorzugt unterhalb des Schlitzes ist eine Befestigungsöffnung zum Festlegen von Kennzeichnungen, Transpondern od. dgl. vorgesehen. Darunter kann auf den entsprechenden Beschriftungsfeldern bspw. ein Barcode od. dgl. vorgesehen sein.

Durch die bevorzugt sehr schmale Ausbildung des Schlitzes lässt sich der Träger am Hals der Ohrmarke anbringen. Dies kann ggf. lösbar oder unlösbar geschehen.

Ist es erforderlich den Träger unlösbar mit der staatlichen Marke zu verbinden, so kann eine Verbindungsstelle den Schlitz durch Öffnen freigeben. Durch bspw. überlappende Streifenelemente Laschen od. dgl. lässt sich mittels einem Verbindungselement unlösbar oder ggf. auch lösbar der Schlitz freigeben. Hierdurch wird ein nachträgliches Einführen bzw. Aufsetzen des Trägers auf den Hals der staatlichen Marke wesentlich erleichtert und vereinfacht. Anschliessend wird durch übereinanderlegen der Streifenelemente der Schlitz lösbar und/oder unlösbar mittels dem Verbindungselement verschlossen. Das Verbindungselement kann ein Niet-, Druckknopf oder eine Sicherheitsverbindung sein, die nur durch Zerstörung zu öffen ist. Dann ist allerdings auch der Träger zerstört. Hierdurch wird zusätzlich ein Fälschungsschutz hergestellt. Die Verbindungsstelle kann auch auf andere Weise als durch überlappende Streifenelemente unlösbar und/oder lösbar verbunden werden. Hier sind der Erfindung keine Grenzen gesetzt. Es können bspw. Schnellverbindungen od. dgl. vorgesehen sein, um den Schlitz zum Festlegen des Trägers an der staatlichen Marke zu öffen und anschliessend zu verschliessen.

Der Träger ist bevorzugt aus elastischem Material gebildet und hängt in etwa parallel zur staatlichen Marke vom Hals nach unten ab. Auch der Träger oberhalb des Schlitzes hängt hinter der staatlichen Marke durch das flexible Material herab. Es stört keinesfalls die Bewegungsfreiheit der staatlichen Marke.

Die flexible Trägermarke mit einfachem Schlitz ist unabhängig von der Formausbildung der staatlichen Marke und kann an alle beliebigen staatlichen Marken universell auf deren Hälse aufgesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 eine Draufsicht auf einen Kälberkopf mit erfindungsgemässen Vorrichtungen zum Kennzeichnen von Tieren;
Fig. 2 eine Draufsicht auf eine staatliche Marke;
Fig. 3 eine Draufsicht auf einen Träger;
Fig. 4 eine Draufsicht auf die Kombination von staatlicher Marke und Träger;
Fig. 5a eine Draufsicht auf einen weiteren erfindungsgemässen Träger gemäss Figur 3;
Fig. 5b eine Draufsicht auf die Kombination von stattlicher Marke und Träger gemäss Figur 5a;
Fig. 5c eine schematisch dargestellte Seitenansicht der Kombination von staatlicher Marke und Träger;
Fig. 6a und 6b jeweilige weitere Ausführungsbeispiele des Trägers gemäss den Figuren 3 und 5 mit einem lösbar und/oder unlösbaren, verschliessbaren Clip;
Fig. 7 eine Draufsicht auf die Kombination von staatlicher Marke und Träger als noch weiteres Ausführungsbeispiel.

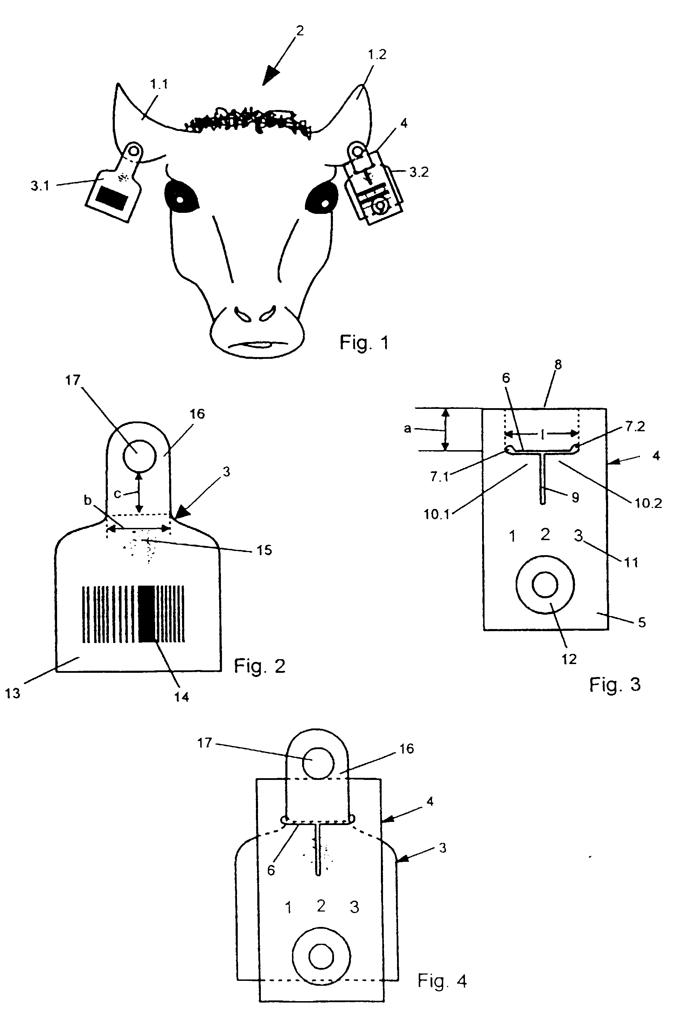

Gemäss Fig. 1 sind den beiden Ohren 1.1 und 1.2 eines Kalbes 2 Marken zum Kennzeichnen des Kalbes zugeordnet. In beiden Ohren befindet sich jeweils eine staatliche Marke 3.1 und 3.2, wobei der staatlichen Marke 3.2 in dem Ohr 1.2 noch ein Träger 4 für weitere Angaben zugeordnet ist.

Dieser Träger 4 besteht gemäss Fig. 3 aus einem Kunststoffstreifen 5, der flexibel ist. In der oberen Hälfte ist in den Kunststoffstreifen 5 ein Schlitz 6 eingeformt, der sich zwischen zwei Ausnehmungen 7.1 und 7.2 erstreckt. Dieser Schlitz 6 zusammen mit den Ausnehmungen 7.1 und 7.2 weist eine Länge l auf. Ferner ist der Schlitz 6 in einem Abstand a von einer oberen Randkante 8 des Kunststoffstreifens 5 angeordnet.

In etwa mittig von dem Schlitz 6 verläuft in etwa in der Längsrichtung des Kunststoffstreifens 5 noch eine Durchstecköffnung 9, die ein flexiblen Ausbiegen von seitlichen Flügeln 10.1 und 10.2 zulässt.

Unterhalb der Durchstecköffnung 9 ist eine Management-Kennzeichnung 11 vorgesehen, die im vorliegenden Ausführungsbeispiel aus einfachen Zahlen besteht.

Wiederum unterhalb der Management-Kennzeichnung befindet sich ein Transponder 12, der Informationen über das Kalb 2 beinhaltet, die bspw. zur automatischen Fütterung bzw. Überwachung an einen Empfänger abgegeben werden, so dass bspw. aufgezeichnet werden kann, wie lange und wieviel ein Kalb an einer Tränke säuft.

Die staatliche Marke 3 besteht gemäss Fig. 2 aus einem Beschriftungsfeld 13, auf welchem zumindest teilweise ein Strichcode 14 und eine weitere Kennzeichnung 15 vorgesehen sind. An das Beschriftungsfeld 13 schliesst ein Hals 16 an, auf dem ein Knopf 17 zum Festlegen der staatlichen Marke 3 an einem Ohr 1 des Kalbes 2 vorgesehen ist. In einem Abstand c von dem Knopf 17 weist der Hals 16 eine Breite b auf, welche bevorzugt der Länge l des Schlitzes 6 entspricht. Ferner entspricht der Abstand a etwa dem Abstand c.

In Fig. 4 ist erkennbar, dass der Träger 4 mit der staatlichen Marke 3 verbunden ist. Dabei durchgreift der Hals 16 den Schlitz 6, wobei sich beim Zusammenfügen die Flügel 10.1 und 10.2 elastisch ausbiegen können. Dadurch, dass die Länge l etwa der Breite b und der Abstand a etwa dem Abstand c entspricht, stösst die obere Randkante 8 an dem Knopf 17 an, so dass ein Hüpfen des Trägers 4 entlang dem Hals 16 vermieden wird. Hierdurch wird vor allem ein Verschleiss des Trägers 4 oder ein Ausreissen im Bereich des Schlitzes 6 verhindert.

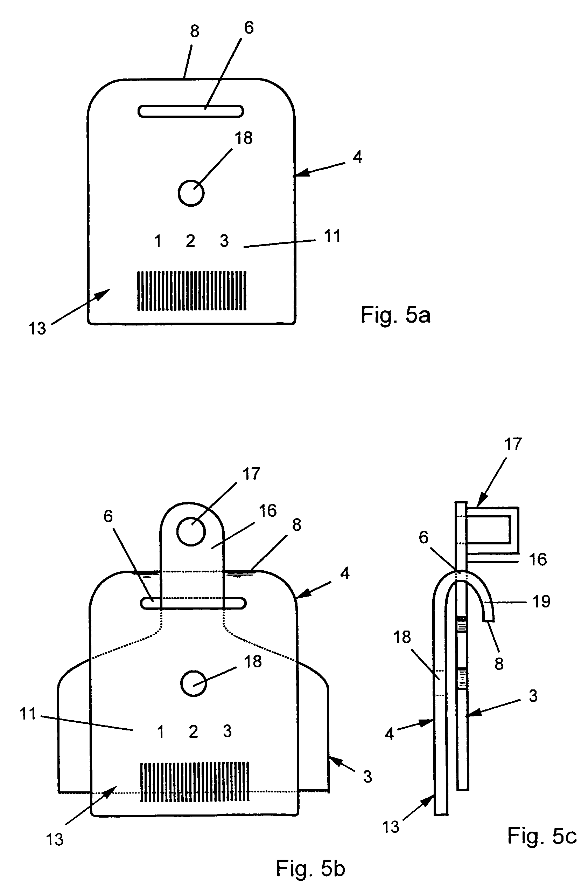

In einem weiteren Ausführungsbeispiel der vorliegenden Erfindung gemäss Figur 5 a ist ein Träger 4 aufgezeigt, welcher rechteckartig ausgebildet ist.

Der Schlitz 6 ist nahe der oberen Randkante 8 vorgesehen. Der Schlitz 6 ist vorzugsweise schmal und länglich parallel zur oberen Randkante 8 ausgebildet. Unterhalb des Schlitzes 6 ist eine Befestigungsöffnung 18 vorgesehen, in welcher ein hier nicht näher dargestellter Transpondor befestigt werden kann. Unterhalb der Befestigungsöffnung 18 ist, wie oben beschrieben, die Management-Kennzeichnung 11 im Beschriftungsfeld 13 vorgesehen.

Wichtig ist hier, dass der Schlitz 6 sehr schmal ausgebildet ist, damit der Träger 4 an der staatlichen Marke 3, insbesondere an deren Hals 16, wie in Figur 5b dargestellt ist, aufliegt.

Der Knopf 17 dient wie oben beschrieben zum Festlegen der staatlichen Marke 3 an dem Ohr des Kalbes 2.

Ferner erlaubt die schmale und längliche Ausbildung des Schlitzes 6 gutes Anliegen an dem Hals 16 der staatlichen Marke 3. Wie insbesondere in Figur 5 c dargestellt ist, wird der Träger 4 bevorzugt aus flexiblem Material hergestellt. Dies erlaubt ein Abklappen eines oberen Steges 19, wobei dann die obere Randkante 8 nach unten abgeklappt vorliegt.

Von Vorteil ist dabei allerdings, dass der Träger 4 parallel zur staatlichen Marke 3 entlang geführt wird. Der Träger 4 liegt nahe an der staatliche Marke 3 an und steht von dieser nicht ab. Hierdurch wird der Halt an der staatlichen Marke 3 verbessert und die Lesbarkeit, insbesondere Ablesbarkeit der Kennzeichnungen bzw. des Beschriftungsfeldes ist erleichtert.

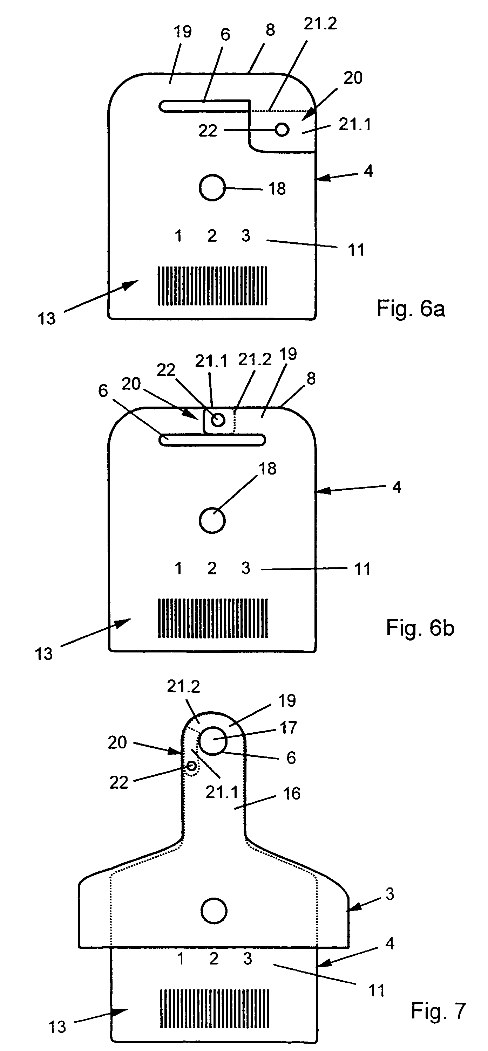

In einem weiteren Ausführungsbeispiel der Erfindung gemäss Figur 6a ist ein Träger 4 vorgesehen, welcher ebenfalls mit dem oben beschriebenen Beschriftungsfeld 13, der Befestigungsöffnung 18 für Kennzeichnungen 15 oder Transponder 12 sowie mit dem Schlitz 6 und daran anschliessendem bevorzugt schmal ausgebildeten oberen Steg 19 vorgesehen ist.

Die Besonderheit dieses Trägers 4 ist, dass eine Verbindungsstelle 20 vorgesehen ist, aus zumindest einem überlappenden Streifenelement 21.1, welches mit dem darunter liegenden Streifenelement 21.2 unlösbar und/oder wiederlösbar mittels eines Verbindungselementes 22 -die Verbindungsstelle 20 bildet. Im vorliegenden Ausführungsbeispiel überlappt ein Teil des oberen Steges 19 seitlich neben dem Schlitz 6 den Träger 4. Das Verbindungselement 22 verbindet das obere Streifenelement 21.1 mit dem darunterliegenden Streifenelement 21.2. Wie gestrichelt dargestellt ist, lässt sich auf diese Weise durch Lösen der beiden Streifenelemente 21.1., 21.2 der Schlitz 6 zum erleichterten Einführen des Halses 16 der staatlichen Marke 3 öffnen.

Anschliessend kann durch das Verbindungselement 22 eine vorzugsweise unwiederlösbare Verbindung hergestellt werden.

Daher ist von Vorteil, wenn der Schlitz 6 lediglich eher schmal und dünn ausgebildet ist. Ein wieder Lösen ist nur durch Zerstörung möglich. Hierdurch wird der Träger 4 fälschungssicher an der staatlichen Marke angebracht.

Sollte es erwünscht sein, so kann jedoch auch das Verbindungselement 22 wiederlösbar ausgebildet sein, um den Träger 4 von der staatlichen Marke 3 wieder zu lösen.

In Figur 6b ist ein oben beschriebener Träger 4 aufgezeigt, wobei jedoch die Verbindungsstelle 20 oberhalb des Schlitzes 6 bevorzugt mittig im oberen Steg 19 vorgesehen ist. Dabei ist der obere Steg 19 zweiteilig ausgebildet wobei sich die Streifenelemente 21.1, 21.2 überlappen. Die Überlappung lässt sich, wie oben beschrieben, durch das Verbindungselement 22 bevorzugt unlösbar und/oder lösbar herstellen, wobei die Streifenelemente 21.1, 21.2 mittels dem Verbindungselement 22 verbindbar sind.

In einem weiteren nicht beanspruchten Beispiel gemäss Figur 7 ist die staatliche Marke 3 vor dem Träger 4 angeordnet.

## Patentansprüche

1. Vorrichtung zum Kennzeichnen von Tieren, insbesondere von Kälber bei der Kälbermast oder Aufzucht, mit einer Marke (3), wobei sich ein Träger (4) unlösbar oder lösbar an einer offiziellen, privaten und/oder ggfs. staatlichen Marke (3) befindet,
dadurch gekennzeichnet,
dass der Träger (4) einen Schlitz (6) aufweist und lösbar um einen Hals (16) der staatlichen Marke (3) nachträglich legbar und durch einen Schlitz (6) des Trägers (4) führbar ist, so dass der Träger (4) vor der staatlichen Marke (3) angeordnet ist, wobei der Schlitz (6) schmal ausgebildet ist und nahe und in etwa parallel der oberen Randkante (8) verläuft.

2. Vorrichtung nach Anspruch 1, dadurch gekennzeichnet, dass ein elektronischer Transponder (12) an einem Träger (4) angeordnet und diesem eine interne Management-Kennzeichnung (11) zugeordnet ist, wobei sich der Träger (4) unlösbar oder lösbar an der offiziellen, ggfs. staatlichen Marke (3) befindet.

3. Vorrichtung nach Anspruch 1 oder 2, dadurch gekennzeichnet, dass der Träger (4) aus einem flexiblen Kunststoffstreifen (5) besteht, auf den ggfs. der Transponder (12) aufgesetzt ist.

4. Vorrichtung nach Anspruch 3, dadurch gekennzeichnet, dass die Management-Kennzeichnung (11) auf dem Kunststoffstreifen (5) aufgeschrieben ist.

5. Vorrichtung nach wenigstens einem der Ansprüche 1 bis 4, dadurch gekennzeichnet, dass der Schlitz (6) eine Länge (1) hat, die einer Breite (b) des Halses (16) der staatlichen Marke (3) in einem Abstand (c) von einem Knopf (17) entspricht, der wiederum einem Abstand (a) einer oberen Randkante (8) des Kunststoffstreifens (5) von dem Schlitz (6) entspricht.

6. Vorrichtung nach wenigstens einem der Ansprüche 1 bis 5, dadurch gekennzeichnet, dass dem Schlitz (6) eine Durchstecköffnung (9) zugeordnet ist.

7. Vorrichtung nach wenigstens einem der Ansprüche 1 bis 6, dadurch gekennzeichnet, dass der Träger (4) zur Unterscheidung verschiedener Benutzer verschiedenfarbig ausgebildet sind.

8. Vorrichtung nach wenigstens einem der Ansprüche 1 bis 7, dadurch gekennzeichnet, dass dem Träger (4) zumindest eine individuelle Kennzeichnung (11, 12, 14) zugeordnet ist.

9. Vorrichtung nach wenigstens einem der Ansprüche 1 bis 8, dadurch gekennzeichnet, dass dem Träger (4) einen Management-Kennzeichnung (11) und/oder Transponder (12) und/oder Strichcode (14) zugeordnet ist.

10. Vorrichtung nach wenigstens einem der Ansprüche 1 bis 9, dadurch gekennzeichnet, dass nahe des Schlitzes (6) eine Verbindungsstelle (20) vorgesehen ist, um den Schlitz (6) ggf. mittels sich überlappender Streifenelemente (21.1, 21.2) unlösbar und/oder lösbar zu verschliessen.

11. Vorrichtung nach wenigstens einem der Ansprüche 1 bis 10, dadurch gekennzeichnet, dass unterhalb des Schlitzes (6) eine Befestigungsöffnung (18) für einen Transponder (12) und/oder eine Kennzeichnung (15) vorgesehen ist.

## Claims

1. Device for marking animals, more especially calves during calf fattening or rearing, having a tag (3), a holder (4) being situated, non-detachably or detachably, on an official, private and/or possibly state tag (3), characterised in that the holder (4) has a slot (6) and is subsequently detachably securable about a neck (16) of the state tag (3) and is guidable through a slot (6) of the holder (4), so that the holder (4) is disposed in front of the state tag (3), the slot (6) having a narrow configuration and extending in the vicinity of and substantially parallel to the upper edge (8).

2. Device according to claim 1, characterised in that an electronic transponder (12) is disposed on a holder (4), and an internal management mark (11) is associated with said holder, the holder (4) being non-detachably or detachably situated on the official, possibly state tag (3).

3. Device according to claim 1 or 2, characterised in that the holder (4) comprises a flexible plastics material strip (5), on which the transponder (12) is possibly fitted.

4. Device according to claim 3, characterised in that the management mark (11) is inscribed on the plastics material strip (5).

5. Device according to at least one of claims 1 to 4, characterised in that the slot (6) has a length (1) which corresponds to a width (b) of the neck (16) of the state tag (3) at a spacing (c) from a knob (17) which, in turn, corresponds to a spacing (a) of an upper edge (8) of the plastics material strip (5) from the slot (6).

6. Device according to at least one of claims 1 to 5, characterised in that an insert opening (9) is associated with the slot (6).

7. Device according to at least one of claims 1 to 6, characterised in that the holders (4) are provided with different colours to distinguish different users.

8. Device according to at least one of claims 1 to 7, characterised in that at least one individual mark (11, 12, 14) is associated with the holder (4).

9. Device according to at least one of claims 1 to 8, characterised in that a management mark (11) and/or a transponder (12) and/or a bar code (14) are/is associated with the holder (4).

10. Device according to at least one of claims 1 to 9, characterised in that a connection point (20) is provided in the vicinity of the slot (6), in order to close the slot (6), non-detachably and/or detachably, possibly by means of overlapping strip elements (21.1, 21.2).

11. Device according to at least one of claims 1 to 10, characterised in that a securement opening (18) for a transponder (12) and/or a mark (15) are/is provided below the slot (6).

## Revendications

1. Dispositif de marquage d'animaux, en particulier de veaux à l'engraissement ou à l'élevage, au moyen d'une marque (3), comprenant un support (4) monté de manière séparable ou inséparable sur une marque (3), officielle, privée ou le cas échéant nationale,
caractérisé en ce que
le support (4) présente une fente (6) qui permet de le monter ultérieurement de manière séparable autour d'un col (16) de la marque nationale (3) en faisant passer cette marque dans la fente (6) du support (4) pour amener celui-ci devant la marque nationale (3), cette fente (6) étant étroite, proche du bord supérieur (8) du support et sensiblement parallèle à ce bord.

2. Dispositif selon la revendication 1,
caractérisé en ce qu'
un transpondeur électronique (12) est monté sur le support (4) auquel est associée une identification de gestion (11), le support étant placé de manière amovible ou non sur la marque officielle, éventuellement nationale (3).

3. Dispositif selon la revendication 1 ou 2,
caractérisé en ce que
le support (4) est fait d'une bande (5) en matière plastique flexible sur laquelle est monté éventuellement le transpondeur (12).

4. Dispositif selon la revendication 3,
caractérisé en ce que
l'identification de gestion (11) est inscrite sur la bande (5) en matière plastique.

5. Dispositif selon au moins l'une quelconque des revendications 1 à 4,
caractérisé en ce que
la fente (6) a une longueur (l) correspondant à la largeur (b) que présente le col (16) de la marque nationale (3) à une distance (c) d'un bouton (17), cette distance correspondant à la distance (a) séparant de la fente (6) le bord supérieur (8) de la bande en matière plastique (5).

6. Dispositif selon au moins l'une quelconque des revendications 1 à 5,
caractérisé en ce qu'
à la fente (6) est associée une ouverture de traversée (9).

7. Dispositif selon au moins l'une quelconque des revendications 1 à 6,
caractérisé en ce que
le support (4), afin de distinguer des utilisateurs différents, est réalisé en différentes couleurs.

8. Dispositif selon au moins l'une quelconque des revendications 1 à 7,
caractérisé en ce qu'
au support (4) est associée au moins une identification individuelle (11, 12, 14).

9. Dispositif selon au moins l'une quelconque des revendications 1 à 8,
caractérisé en ce qu'
au support (4) est associée une identification de gestion (11) et/ou un transpondeur (12) et/ou un code à barres (14).

10. Dispositif selon au moins l'une quelconque des revendications 1 à 9,
caractérisé en ce que
près de la fente (6) est prévue une zone de liaison (20) pour fermer de manière séparable ou non, la fente (6), le cas échéant au moyen d'éléments de bande (21.1, 21.2) se superposant.

11. Dispositif selon au moins l'une quelconque des revendications 1 à 10,
caractérisé en ce qu'
il est prévu, en dessous de la fente (6), une ouverture (18) pour fixer un transpondeur (12) et/ou une identification (15).
